# EUROPEAN PATENT SPECIFICATION

(11) **EP 2 123 177 B1**
(45) Date of publication and mention of the grant of the patent: **18.04.2012**
(21) Application number: 08156298.5
(22) Date of filing: 15.05.2008
(51) Int. Cl.: A23C 9/13, A23L 2/52, A23L 2/56

(54) **Pre-fibril composition and fibrils from proteinaceous materials**
Prä-Fibrilläre Zusammensetzung und Fibrillen aus proteinhaltigem Material
Composition pre-fibrillaire et fibrilles à partir de matériaux protéiques

(43) Date of publication of application: 25.11.2009
(73) Proprietor: Friesland Brands B.V., 3818 LE Amersfoort (NL)
(72) Inventor: Akkermans, Cynthia, 3825 EH Amersfoort (NL); Schokker, Erik Peter, 6721 BJ Bennekom (NL); Paques, Marcel, 3941 DM Doorn (NL); Nieuwenhuijse, Johannes Andries, 7207 NA Zutphen (NL); Zijtveld-van der Wiel, Johanna Henriëtte, 3743 BP Baarn (NL); Venema, Paul, 6701 EC Wegeningen (NL); van der Goot, Atze Jan, 6717 TR Ede (NL)
(74) Representative: Hatzmann, Martin

(56) References cited:
- WO-A-2004/049819
- WO-A-2008/088472
- JP-A- 8 070 866
- CYNTHIA AKKERMANS ET AL: "Shear Pulses Nucleate Fibril Aggregation" FOOD BIOPHYSICS, KLUWER ACADEMIC PUBLISHERS-PLENUM PUBLISHERS, NE, vol. 1, no. 3, 23 May 2006 (2006-05-23), pages 144-150, XP019413858 ISSN: 1557-1866
- AKKERMANS CYNTHIA ET AL: "Peptides are building blocks of heat-induced fibrillar protein aggregates of beta-lactoglobulin formed at pH 2" BIOMACROMOLECULES, vol. 9, no. 5, 17 April 2008 (2008-04-17), pages 1474-1479, XP002504412 ISSN: 1525-7797
- AKKERMANS C ET AL: "Micrometer-sized fibrillar protein aggregates from soy glycinin and soy protein isolate." JOURNAL OF AGRICULTURAL AND FOOD CHEMISTRY, vol. 55, no. 24, 30 October 2007 (2007-10-30), pages 9877-9882, XP002504413
- LINDEN E VAN DER ET AL: "Self-assembly and aggregation of proteins." CURRENT OPINION IN COLLOID AND INTERFACE SCIENCE, vol. 12, no. 4-5, 2007, pages 158-165, XP002504414
- MADSEN J S ET AL: "Hydrolysis of milk protein by a Bacillus licheniformis protease specific for acidic amino acid residues" JOURNAL OF FOOD SCIENCE, vol. 62, no. 3, 1997, pages 579-582, XP002504751 ISSN: 0022-1147
- HAZEBROUCK STÉPHANE ET AL: "Efficient production and secretion of bovine [beta]-lactoglobulin by Lactobacillus casei" MICROBIAL CELL FACTORIES, BIOMED CENTRAL, LONDON, NL, vol. 6, no. 1, 6 April 2007 (2007-04-06), page 12, XP021024079 ISSN: 1475-2859

## Description

The invention pertains to the making of fibrils from proteinaceous materials uch as obtained from whey protein. In particular, the invention pertains to the making of fibrils from proteinaceous material obtained from a β-lactoglobulin, glycinin or patatin

As described in WO 2004/049819, β-lactoglobulin can be subjected to a process resulting in fibrils. The process comprises dissolving the β-lactoglobulin in aqueous hydrochloric acid, repeatedly diluting and filtering the protein solution, and subjecting the resulting solution to elevated temperature (e.g. 80°C) for an extended period of time (e.g. 10 hours). As described in WO 2004/049819, this process results in the protein being aggregated into fibrils. These fibrils can be used as an additive in a wide range of food and non-food products, wherein the fibrils can have varying different functions, such as foam stabilisation, enhancing of water-binding and/or texture in meat or meat-like products, general texturizing properties including viscosity improvement, gelling ability enhancement. In general, the fibrils have improved functional properties comprising thickening capability, gelling capability, foaming capability, and emulsifying capability. These improvements are described with reference to the same protein in the same concentration, but not subjected to the aforementioned process.

It will be apparent that for not all of the improved functional properties of the proteinaceous fibrils of WO 2004/049819, a fibrillar texture is desired per se. Further, in the manufacture of many of these products it will not be desired for the manufacturer, or the person combining ingredients into products, to conduct the above-described process before putting the additive into a product. In many such cases, a ready-to-use additive, available e.g. as a dry powder, were preferred over the in situ preparation of proteinaceous fibrils from proteins using the aforementioned process.

It would be desired, without detracting from the functional possibilities provided by the fibrils themselves, to make available similar functionalities in a process that does not require heating for an extended period of time. It would also be desired to provide an intermediate product that can be stored and shipped e.g. as a powder, and that is capable of being transformed into fibrils at a chosen point in time. A further desire in this respect is to provide an ingredient that can be rendered into powder from a relatively low viscous solution. It would further be desired to provide a process in which the two aspects of the afore-described fibrils, viz. functional properties and fibrillar nature, can be realized in separate process steps, or at least in separate parts of a process. By preference it would be desired if thus, by selecting conditions, the ultimate composition and functionality of the proteinaceous composition and the fibrils formed there from could be tailored.

With the aim to meet one or more of these objectives, the invention, in one aspect, provides a peptide pre-fibril composition obtainable by the hydrolysis of a protein selected from the group consisting of β-lactoglobulin-containing whey protein preparation, glycinin-containing soy bean protein preparation, patatin, and mixtures thereof, wherein the hydrolysis is conducted under acidic conditions at elevated temperature. In another aspect, the invention pertains to a method of making a peptide pre-fibril composition, comprising providing a solution of a protein as described above in an aqueous acidic solvent, and heating the solution under fibril formation inhibiting conditions. In yet another aspect, the invention provides a variety of uses of the peptide pre-fibril compositions, including uses in which the pre-fibril composition is turned into fibrils in an end-product - that can then be used as described in WO 2004/049819, and uses in which the pre-fibril composition per se is contained in end product, e.g. with the aim of forming fibrils (fibrillary aggregation) upon use or consumption of the end-product. In a particular embodiment of the latter aspect of the invention, the pre-fibril composition is used in a diet food for human or animal body weight control.

As to the conditions mentioned, the elevated temperature generally means a temperature above 20°C, preferably of from 35 °C to 140 °C, and more preferably of from 80 °C to 120 °C. The acidic conditions can refer to any acid pH, but preferably a relatively strongly acidic pH, of from 0.5 to 4, more preferably of from 0.5 to 3, and most preferably of from 1 to 2. A higher temperature, above 80°C and more preferably above 100°C, is particularly preferred in view of the possibility to separate hydrolysis from fibril formation, as a higher temperature will lead to an increased rate of hydrolysis.

Further background art references that relate to subjecting proteins such as beta-lactoglobulin, soy glycinin, and soy protein isolate to acid hydrolysis, and which discuss the formation of fibrils, are:
- Akkermans et al., "Shear Pulses Nucleate Fibril Aggregation", Food Biophysics, Kluwe Academic Publishers-Plenum Publishers, NE, viol.1, no.3, 23 May 2006, pages 144-150;
- Akkermans et al.; Biomacromolecules, vol.9, no. 5, 17 April 2008, pages 1474-1479;
- Akkermans et al.; Journal of Agricultural and Food Chemistry, vol.55, no.24, 30 October 2007, pages 9877-9882;

A general reference on protein aggregation is van der Linden et al.; Current Opinion in Colloid And Interface Science, viol.12, no. 4-5, 2007, pages 158-165;

Madsen et al.; Journal of Food Science, vol.62, no.3, 1997, pages 579-582 provides background art on an isolated serin protease that preferably cleaves at the carboxylic site of aspartic or glutamic acid residues for use in hydrolysing beta-lactoglobulin.

WO 2008/088472 is a non-prepublished, earlier filed patent application that relates to enzymatic hydrolysis of beta-lactoglobulin using an endopeptidase that preferably cleaves at an aspartic or glutamic acid residue. A proviso is added to claim 1 in respect of this reference.

JP 08/070866 provides background art relating to the microbial synthesis of beta-lactoglobulin. Another such reference is Hazebrouck et al.; Microbial Cell Factories, Biomed Central, vol.6, no. 1, 6 April 2007, page 12.

Without wishing to be bound by theory, the present inventors believe that, other than suggested in the art, the so-called β-lactoglobulin fibrils, are not in fact made up of intact β-lactoglobulin protein molecules as a building block, but are made of peptide components derived from the β-lactoglobulin. This novel insight into the nature of the aforementioned proteinaceous fibrils opens up the wide range of useful possibilities now proffered by the invention. Similarly, it was found that fibrils of soy bean protein and potato protein are made up of peptides.

Particularly, by virtue of the formation of peptides, an intermediate step can be defined in the aforementioned process, viz. a step in which the hydrolysis has occurred in a sufficient manner so as to form the peptide building blocks for the fibrils, but not yet the fibrils themselves. This is referred to as a "pre-fibril composition."

The invention provides a method of making a peptide pre-fibril composition by the hydrolysis of a protein selected from the group consisting of β-lactoglobulin-containing whey protein preparation, glycinin-containing soy bean protein preparation, patatin, and mixtures thereof, the method comprising subjecting the protein to enzymatic hydrolysis, with the proviso that the peptide pre-fibril composition is not a hydrolyzate comprising a milk protein that includes beta lactoglobulin hydrolyzed with at least one proteolytic enzyme that cleaves preferentially at a glutamic acid or aspartic acid residue, and wherein the hydrolyzate is enriched in one or more of the peptides AQSAPLRVYVE, ILLQKWE, KTKIPAVFKID, or KTKIPAVFKIDALNE.

The invention can be realised on the basis of β-lactoglobulin-containing whey protein preparations, i.e. a composition comprising whey protein, with the whey protein comprising β-lactoglobulin. Whey proteins can be described as those milk proteins that remain after curdling of milk, i.e. precipitation of casein, generally upon the addition of rennet to cheese milk. The term "whey protein" is sometimes used to indicate the entire protein composition of whey, but usually indicates any protein or combination of proteins present in whey. The invention pertains to any and all whey protein compositions comprising β-lactoglobulin, which is one of the main whey proteins. Preferably the β-lactoglobulin- containing whey protein preparation is whey protein isolate, comprising a substantial fraction (preferably, based on total proteinaceous material, at least 50% and more preferably at least 80%) of β-lactoglobulin, and most preferably it is β-lactoglobulin itself.

The invention can also be realized on the basis of glycinin (soy bean protein) or patatin (protein originating from members of the *Solanacceace* plant familiy, such as potato protein).

The pre-fibril composition may comprise a wide range of peptide fragments of various molecular weights, generally between 1,000 and 10,000 Da and preferably consists of peptide fragments having molecular weights between 2,000 and 8,000 Da. With respect to whey protei fibrils it is preferred that the pre-fibril composition comprises, as the dominant fragment, i.e. the fragment that of all fragments is present most, defined by amino acids nos. 12 to 32 (f₁₂₋₃₃) of from β-lactoglobulin, i.e. IQKVAGTWYSLAMAASDISLL. This fragment can be present, as such, as part of larger fragments, or both. Preferably the following peptides:

| | |
|---|---|
| f₁₂₋₃₂ | IQKVAGTWYSLAMAASDISLL |
| f₁₂₋₃₃ | IQKVAGTWYSLAMAASDISLLD |
| f₁₁₋₃₂ | DIQKVAGTWYSLAMAASDISLL |
| f₁₁₋₃₃ | DIQKVAGTWYSLAMAASDISLLD |
| f₁₋₃₂: | LIVTQTMKGLDIQKVAGTWYSLAMAASDISLL |
| f₁₋₃₃: | LTVTQTMKGLDIQKVAGTWYSLAMAASDISLLD |
| f₁₋₂₇ | LIVTQTMKGLDIQKVAGTWYSLAMAAS |
| f₁₋₂₈ | LIVTQTMKGLDIQKVAGTWYSLAMAASD |
| f₁₂₋₆₄ | IQKVAGTWYSLAMAASDISLLDAQSAPLRVYVEELKPTPEGDLEILLQKWEND |
| f₁₁₋₆₃ | DIQKVAGTWYSLAMAASDISLLDAQSAPLRVYVEELKPTPEGDLEILLQKWEN |
| f₁₁₋₆₄ | DIQKVAGTWYSLAMAASDISLLDAQSAPLRVYVEELKPTPEGDLEILLQKWEND |

The fragment is preferably present, as defined hereinbefore, to the extent of more than 40% of all peptides present

The peptide composition preferably further comprises one or more of the following peptides:

| | |
|---|---|
| f₁₋₅₂: | LIVTQTMKGLDIQKVAGTWYSLAMAASDISLLDAQSAPLRVYVEELKPTPEG |
| f₁₋₅₃: | LIVTQTMKGLDIQKVAGTWYSLAMAASDISLLDAQSAPLRVYVEELKPTPEGD |
| f₁₃₈₋₁₆₂ | KALKALPMHIRLSFNPTQLEEQCHI |
| f₉₉₋₁₂₈ | YKKYLLFCMENSAEPEQSLACQCCLVRTPEV |
| f₉₉₋₁₂₉ | YKKYLLFCMENSAEPEQSLACQCCLVRTPEVD |
| f₉₈₋₁₂₈ | DYKKYLLFCMENSAEPEQSLACQCCLVRTPEV |
| f₉₇₋₁₂₈ | TDYKKYLLFCMENSAEPEQSLACQCCLVRTPEV |

Other preferred characteristics of the prefibril peptide composition so obtainable, is that the majority of the peptide fragments result from cleavage of the peptide bonds before or after aspartic acid. The pre-fibril peptide composition is further characterized, preferably, by a comprising the more hydrophobic peptides obtainable from hydrolysis of the β-lactoglobulin-containing protein preparation, by a low charge at pH 2, and by the absence of proline.

It is further envisaged to enrich the peptide composition (e.g. by fractionation) in respect of the aforementioned peptides, and preferably in respect of f₁₂₋₃₃.

Similarly, preferred fibril-forming peptide fragments on the basis of glycinin and patatin are based on the following:

### Glycinin G1

Accession number: P04776

| | |
|---|---|
| f₄₂₋₁₂₈ | DNRIESEGGLIETWNPNNKPFQCAGVALSRCTLNRNALRRPSYTNGP QEIYIQQGKGIFGMIYPGCPSTFEEPQQPQQRGQSSRPQD |
| f₄₂₋₁₂₇ | DNRIESEGGLIETWNPNNKPFQCAGVALSRCTLNRNALRRPSYTNGP QEIYIQQGKGIFGMIYPGCPSTFEEPQQPQQRGQSSRPQ |
| f₄₃₋₁₂₈ | NRIESEGGLIETWNPNNKPFQCAGVALSRCTLNRNALRRPSYTNGPQ EIYIQQGKGIFGMIYPGCPSTFEEPQQPQQRGQSSRPQD |
| f₄₃₋₁₂₇ | NRIESEGGLIETWNPNNKPFQCAGVALSRCTLNRNALRRPSYTNGPQ EIYIQQGKGIFGMIYPGCPSTFEEPQQPQQRGQSSRPQ |
| f₁₂₈₋₁₄₀ | DRHQKIYNFREGD |
| f₁₂₈₋₁₃₉ | DRHQKIYNFREG |
| f₁₂₉₋₁₄₀ | RHQKIYNFREGD |
| f₁₂₉₋₁₃₉ | RHQKIYNFREG |
| f₁₄₀₋₁₅₇ | DLIAVPTGVAWWMYNNED |
| f₁₄₀₋₁₅₆ | DLIAVPTGVAWWMYNNE |
| f₁₄₁₋₁₅₇ | LIAVPTGVAWWMYNNED |
| f₁₄₁₋₁₅₆ | LIAVPTGVAWWMYNNE |
| f₁₅₇₋₁₆₇ | DTPVVAVSIID |
| f₁₅₇₋₁₆₆ | DTPWAVSII |
| f₁₅₈₋₁₆₇ | TPVVAVSIID |
| f₁₅₈₋₁₆₆ | TPVVAVSII |
| f₁₇₆₋₂₃₆ | DQMPRRFYLAGNQEQEFLKYQQEQGGHQSQKGKHQQEEENEGGSI LSGFTLEFLEHAFSVD |
| f₁₇₆₋₂₃₅ | DQMPRRFYLAGNQEQEFLKYQQEQGGHQSQKGKHQQEEENEGGSI LSGFTLEFLEHAFSV |
| f₁₇₇₋₂₃₆ | QMPRRFYLAGNQEQEFLKYQQEQGGHQSQKGKHQQEEENEGGSIL SGFTLEFLEHAFSVD |
| f₁₇₇₋₂₃₆ | QMPRRFYLAGNQEQEFLKYQQEQGGHQSQKGKHQQEEENEGGSIL SGFTLEFLEHAFSV |
| f₂₅₁₋₂₇₀ | DKGAIVTVKGGLSVIKPPTD |
| f₂₅₁₋₂₆₉ | DKGAIVTVKGGLSVIKPPT |
| f₂₅₂₋₂₇₀ | KGAIVTVKGGLSVIKPPTD |
| f₂₅₂₋₂₆₉ | KGAIVTVKGGLSVIKPPT |
| f₃₁₃₋₃₃₂ | DETICTMRLRHNIGQTSSPD |
| f₃₁₃₋₃₃₁ | DETICTMRLRHNIGQTSSP |
| f₃₁₄₋₃₃₂ | ETICTMRLRHNIGQTSSPD |
| f₃₁₄₋₃₃₁ | ETICTMRLRHNIGQTSSP |
| f₃₃₂₋₃₄₈ | DIYNPQAGSVTTATSLD |
| f₃₃₂₋₃₄₇ | DIYNPQAGSVTTATSL |
| f₃₃₃₋₃₄₈ | IYNPQAGSVTTATSLD |
| f₃₃₃₋₃₄₇ | IYNPQAGSVTTATSL |
| f₃₄₈₋₄₀₃ | DFPALSWLRLSAEFGSLRKNAMFVPHYNLNANSIIYALNGRALIQVV NCNGERVFD |
| f₃₄₈₋₄₀₂ | DFPALSWLRLSAEFGSLRKNAMFVPHYNLNANSIIYALNGRALIQVV NCNGERVF |
| f₃₄₉₋₄₀₃ | FPALSWLRLSAEFGSLRKNAMFVPHYNLNANSIIYALNGRALIQVVN CNGERVFD |
| f₃₄₉₋₄₀₂ | FPALSWLRLSAEFGSLRKNAMFVPHYNLNANSIIYALNGRALIQVVN CNGERVF |
| f₄₀₃₋₄₂₇ | DGELQEGRVLIVPQNFVVAARSQSD |
| f₄₀₃₋₄₂₆ | DGELQEGRVLIVPQNFWAARSQS |
| f₄₀₄₋₄₂₇ | GELQEGRVLIVPQNFVVAARSQSD |
| f₄₀₄₋₄₂₆ | GELQEGRVLIVPQNFVVAARSQS |
| f₄₂₇₋₄₃₈ | DNFEYVSFKTND |
| f₄₂₇₋₄₃₇ | DNFEYVSFKTN |
| f₄₂₈₋₄₃₈ | NFEYVSFKTND |
| f₄₂₈₋₄₃₇ | NFEYVSFKTN |
| f₄₃₈₋₄₉₀ | DTPNUGTLAGANSLLNALPEEVIQHTFNLKSQQARQIKNNNPFKFLV PPQESQ |
| f₄₃₉₋₄₉₀ | TPMIGTLAGANSLLNALPEEVIQHTFNLKSQQARQIKNNNPFKFLVP PQESQ |

### Glycinin G5

Accession number: P04347

| | |
|---|---|
| f₄₄₋₁₃₃ | DHRVESEGGLIETWNSQHPELQCAGVTVSKRTLNRNGSHLPSYLPY PQMIIVVQGKGAIGFAFPGCPETFEKPQQQSSRRGSRSQQQLQD |
| f₄₄₋₁₃₂ | DHRVESEGGLIETWNSQHPELQCAGVTVSKRTLNRNGSHLPSYLPY PQMIIWQGKGAIGFAFPGCPETFEKPQQQSSRRGSRSQQQLQ |
| f₄₅₋₁₃₃ | HRVESEGGLIETWNSQHPELQCAGVTVSKRTLNRNGSHLPSYLPYP QMIIVVQGKGAIGFAFPGCPETFEKPQQQSSRRGSRSQQQLQD |
| f₄₅₋₁₃₂ | HRVESEGGLIETWNSQHPELQCAGVTVSKRTLNRNGSHLPSYLPYP QMIIWQGKGAIGFAFPGCPETFEKPQQQSSRRGSRSQQQLQ |
| f₁₃₃₋₁₄₅ | DSHQKIRHFNEGD |
| f₁₃₃₋₁₄₄ | DSHQKIRHFNEG |
| f₁₃₄₋₁₄₅ | SHQKIRHFNEGD |
| f₁₃₄₋₁₄₄ | SHQKIRHFNEG |
| f₁₄₅₋₁₆₂ | DVLVIPLGVPYWTYNTGD |
| f₁₄₅₋₁₆₁ | DVLVIPLGVPYWTYNTG |
| f₁₄₆₋₁₆₂ | VLVIPLGVPYWTYNTGD |
| f₁₄₆₋₁₆₁ | VLVIPLGVPYWTYNTG |
| f₁₆₂₋₁₇₂ | DEPWAISPLD |
| f₁₆₂₋₁₇₁ | DEPVVAISPL |
| f₁₆₃₋₁₇₂ | EPWAISPLD |
| f₁₆₃₋₁₇₁ | EPWAISPL |
| f₁₈₁₋₁₉₄ | DQNPRVFYLAGNPD |
| f₁₈₁₋₁₉₃ | DQNPRVFYLAGNP |
| f₁₈₂₋₁₉₄ | QNPRVFYLAGNPD |
| f₁₈₂₋₁₉₃ | QNPRVFYLAGNP |
| f₂₅₆₋₂₈₀ | DERKQIVTVEGGLSVISPKWQEQED |
| f₂₅₆₋₂₇₉ | DERKQIVTVEGGLSVISPKWQEQE |
| f₂₅₇₋₂₈₀ | ERKQIVTVEGGLSVISPKWQEQED |
| f₂₆₉₋₂₉₉ | ERKQIVTVEGGLSVISPKWQEQE |
| f₃₄₅₋₃₆₆ | GVEENICTMKLHENIARPSRAD |
| f₃₄₅₋₃₆₆ | GVEENICTMKLHENIARPSRA |
| f₃₆₆₋₄₀₇ | DFYNPKAGRISTLNSLTLPALRQFGLSAQYVVLYRNGIYSPD |
| f₃₆₆₋₄₀₆ | DFYNPKAGRISTLNSLTLPALRQFGLSAQYVVLYRNGIYSP |
| f₃₆₇₋₄₀₇ | FYNPKAGRISTLNSLTLPALRQFGLSAQYVVLYRNGIYSPD |
| f₃₆₇₋₄₀₆ | FYNPKAGRISTLNSLTLPALRQFGLSAQYVVLYRNGIYSP |
| f₄₀₇₋₄₃₆ | DWNLNANSVTMTRGKGRVRVVNCQGNAVFD |
| f₄₀₇₋₄₃₅ | DWNLNANSVTMTRGKGRVRVVNCQGNAVF |
| f₄₀₈₋₄₃₆ | WNLNANSVTMTRGKGRVRVVNCQGNAVFD |
| f₄₀₈₋₄₃₅ | WNLNANSVTMTRGKGRVRVVNCQGNAVF |
| f 436-480 | DGELRRGQLLVVPQNPAVAEQGGEQGLEYVVFKTHHNAVSSYIKD |
| f 436-479 | DGELRRGQLLWPQNPAVAEQGGEQGLEYVVFKTHHNAVSSYIK |
| f 437-480 | GELRRGQLLVVPQNPAVAEQGGEQGLEYWFKTHHNAVSSYIKD |
| f ₄₃₇₋₄₇₉ | GELRRGQLLVVPQNPAVAEQGGEQGLEYVVFKTHHNAVSSYIK |
| f₄₈₀₋₅₁₆ | DVFRVIPSEVLSNSYNLGQSQVRQLKYQGNSGPLVNP |
| f₄₈₁₋₅₁₆ | VFRVIPSEVLSNSYNLGQSQVRQLKYQGNSGPLVNP |

### Patatin

Accession number: CAA25592

| | |
|---|---|
| f₂₃₋₃₅ | DTLGEMVTVLSID |
| f₂₃₋₃₄ | DTLGEMVTVLSI |
| f₂₄₋₃₅ | TLGEMVTVLSID |
| f₂₄₋₃₄ | TLGEMVTVLSI |
| f₇₁₋₁₀₁ | DVIGGTSTGGLLTAMITTPNENNRPFAAAKD |
| f₇₁₋₁₀₀ | DYIGGTSTGGLLTAMITTPNENNRPFAAAK |
| f₇₂₋₁₀₁ | VIGGTSTGGLLTAMITTPNENNRPFAAAKD |
| f₇₂₋₁₀₀ | VIGGTSTGGLLTAMITTPNENNRPFAAAK |
| f₁₄₀₋₁₅₆ | DTRVHQALTEVAISSFD |
| f₁₄₀₋₁₅₅ | DTRVHQALTEVAISSF |
| f₁₄₁₋₁₅₆ | TRVHQALTEVAISSFD |
| f₁₄₁₋₁₅₅ | TRVHQALTEVAISSF |
| f₁₅₆₋₁₈₂ | DIKTNKPVIFTKSNLAKSPELDAKMYD |
| f₁₅₆₋₁₈₁ | DIKTNKPVIFTKSNLAKSPELDAKMY |
| f₁₅₇₋₁₈₂ | IKTNKPVIFTKSNLAKSPELDAKMYD |
| f₁₅₇₋₁₈₁ | IKTNKPVIFTKSNLAKSPELDAKMY |
| f₁₈₂₋₂₀₇ | DICYSTAAAPTYFPPHYFVTHTSNGD |
| f₁₈₂₋₂₀₆ | DICYSTAAAPTYFPPHYFVTHTSNG |
| f₁₈₃₋₂₀₇ | ICYSTAAAPTYFPPHYFVTHTSNGD |
| f₁₈₃₋₂₀₆ | ICYSTAAAPTYFPPHYFVTHTSNG |
| f₂₀₇₋₂₁₅ | DKYEFNLVD |
| f₂₀₇₋₂₁₄ | DKYEFNLV |
| f₂₃₋₃₅ | DTLGEMVTVLSID |
| f₂₃₋₃₄ | DTLGEMVTVLSI |
| f₂₄₋₃₅ | TLGEMVTVLSID |
| f₂₄₋₃₄ | TLGEMVTVLSI |
| f₇₁₋₁₀₁ | DVIGGTSTGGLLTAMITTPNENNRPFAAAKD |
| f₇₁₋₁₀₀ | DVIGGTSTGGLLTAMITTPNENITTRPFAAAK |
| f₇₂₋₁₀₁ | VIGGTSTGGLLTAMITTPNENNRPFAAAKD |
| f₇₂₋₁₀₀ | VIGGTSTGGLLTAMITTPNENNRPFAAAK |
| f₁₄₀₋₁₅₆ | DTRVHQALTEVAISSFD |
| f₁₄₀₋₁₅₅ | DTRVHQALTEVAISSF |
| f₁₄₁₋₁₅₆ | TRVHQALTEVAISSFD |
| f₁₄₁₋₁₅₅ | TRVHQALTEVAISSF00 |
| f₁₅₆₋₁₈₂ | DIKTNKPVIFTKSNLAKSPELDAKMYD |
| f₁₅₆₋₁₈₁ | DIKTNKPVIFTKSNLAKSPELDAKMY |
| f₁₅₇₋₁₈₂ | IKTNKPVIFTKSNLAKSPELDAKMYD |

| | | |
|---|---|---|
| f₁₅₇₋₁₈₁ | | IKTNKPVIFTKSNLAKSPELDAKMY |
| f₁₈₂₋₂₀₇ | | DICYSTAAAPTYFPPHYFVTHTSNGD |
| f₁₈₂₋₂₀₆ | | DICYSTAAAPTYFPPHYFVTHTSNG |
| f₁₈₃₋₂₀₇ | | ICYSTAAAPTYFPPHYFVTHTSNGD |
| f₁₈₃₋₂₀₆ | | ICYSTAAAPTYFPPHYFVTHTSNG |
| f₂₀₇₋₂₁₅ | | DKYEFNLVD |
| f₂₀₇₋₂₁₄ | | DKYEFNLV |
| f₂₀₈₋₂₁₅ | KYEFNLVD | |
| f₂₀₈₋₂₁₄ | KYEFNLV | |
| f₂₃₉₋₂₆₇ | DPKFASIKSLNYKQMLLLSLGTGTNSEFD | |
| f₂₃₉₋₂₆₆ | DPKFASIKSLNYKQMLLLSLGTGTNSEF | |
| f₂₄₀₋₂₆₇ | PKFASIKSLNYKQMLLLSLGTGTNSEFD | |
| f₂₄₀₋₂₆₆ | PKFASIKSLNYKQMLLSLGTGTNSEF | |
| f₃₀₀₋₃₃₃ | DYYLSTVFQARHSQNNYLRVQENALTGTTTEMDD | |
| f₃₀₀₋₃₃₂ | DYYLSTVFQARHSQNNYLRVQENALTGTTTEMD | |
| f₃₀₀₋₃₃₁ | DYYLSTVFQARHSQNNYLRVQENALTGTTTEM | |
| f₃₀₁₋₃₃₃ | YYLSTVFQARHSQNNYLRVQENALTGTTTEMDD | |
| f₃₀₁₋₃₃₂ | YYLSTVFQARHSQNNYLRVQENALTGTTTEMD | |
| f₃₀₁₋₃₃₁ | YYLSTVFQARHSQNNYLRVQENALTGTTTEM | |

Based on the novel insight into the occurrence of peptides as the building blocks of the β-lactoglobulin proteinaceous fibrils, the present invention provides an advantageous alternative method to acidic hydrolysis, viz. enzymatic hydrolysis of the β-lactoglobulin-containing whey protein preparation (or, analogously, of glycinin or patatin preparations). Thus, the advantages of enzymatic hydrolysis, such as producing the prefibril composition at neutral pH (i.e. no need for acidification and neutralization); avoidance of fibril formation at neutral pH; less unwanted side-reaction that occur at low pH) or relatively fast hydrolysis (i.e. no need for heat treatment for several hours, and unwanted reaction associated with this long heat treatment) have become available to the process of making β-lactoglobulin proteinaceous fibrils. The enzymatic hydrolysis provides a relatively great freedom to choose, by selecting the enzymes and conditions, where to achieve protein cleavage. This is preferably done so as to have a result comparable with that of acidic hydrolysis, e.g. by the enzyme AspN endoproteinase which cleaves the peptide bonds N-terminal to aspartic acid residues and other enzymes exerting a comparable action such as gramzyme B (ex Abnova Corp), V8 protease (protease from staphylococcus aureus strain V8; ex Takara Bio Inc.) and glutamyl endopeptidase.

The pre-fibril composition as formed by enzymatic hydrolysis can be set to form fibrils upon acidification. This preferably is done to an extent comparable with the pH resulting from the aforementioned acidic hydrolysis, i.e. the enzymatically hydrolysed β-lactoglobulin pre-fibril composition is preferably subjected to contact with a liquid at pH 0.5 to 4, and more preferably a pH of 0.5 to 3, and most preferably of from 1 to 2, thus resulting in appropriate charging of the peptide composition. The rate of fibril formation may be increased by subjecting the mixture to shear or ultrasonic treatment. One of the advantages of this route is a shorter duration of the low pH heat treatment.

The fibrils formed according to the present invention preferably have an aspect ratio of greater than 5, i.e. defining the longest dimension of the fibril as its length, this length is at least 5 times larger than the diameter or width of the fibril. Preferably the length is of from 10 nm to 1 mm, and the diameter is of from 2 to 10 nm. More preferably the aspect ratio is greater than 50. The invention provides the advantageous possibility to tailor the aspect ratio by steering the peptide composition towards the presence of peptides that facilitate the formation of fibrils (which will generally lead to a higher aspect ratio) or the presence of peptides that inhibit fibril formation, such as the aforementioned β-sheet blockers, which will generally lead to a lower aspect ratio.

The pre-fibril composition made by the process of the invention is suitable for a variety of uses. This includes uses of the pre-fibril composition itself as an additive in food and non-food products, e.g. as a structuring agent, and particularly as a texturizing agent, i.e. for viscosity or gelation. It also includes the use of the pre-fibril composition to make fibrils which then can be used int.al.al. in the same manner as described in WO 2004/049819. In addition, the invention opens up the possibility to end up with fibrils as described before, but then formed *in situ* and/or at a chosen point in time. Thus, the peptide pre-fibril composition can int.al. be used to stabilize an emulsion or a foam. Upon adsorption at the appropriate interface (i.e. water/oil in an emulsion or water/air in a foam), the peptide pre-fibril composition is capable of fibrillary aggregation at these interfaces, which results in a robust boundary layer, and hence a highly stable emulsion or foam (as a result of a decreased disproportioning of the foam). Another use in which the peptide pre-fibril composition made by the process_of the invention is used for its ability to form fibrils, is by adding the composition as an ingredient to an acidic liquid (e.g. fruit juice or yoghurt drink), to result in fibrillary aggregation (of varying extent, depending on conditions as will be apparent to the skilled person). This will result in a viscosity enhancement or gelation (the effect depending on concentration). The rate at which this occurs can be steered with reference to variable parameters such as pH and concentration, so as to obtain immediate or retarded fibrillary aggregation. Particularly if a retarded effect is desired, it will be advantageous to add the pre-fibril peptide composition in an encapsulated form. This can have the advantage of further retarding the effect from fibrillary aggregation.

Retarded fibril formation provides a particular advantage in production, as the product can be maintained as a low-viscous mass during processing steps, such as pumping, in which a low viscosity can be beneficial.

The pre-fibril peptide composition has a great advantage in that it does not itself have a substantial influence on the texture of foods and drinks. This enables making a solid or liquid food product that has a built-in effect of satisfying the stomach (satiation). Thus, when consumed by a person, the peptide composition will not disturb mouthfeel, as it will remain intact until it arrives in the gastric juice. Due to the pH thereof, and the benefit of elevated (body) temperature, fibrillary aggregation will occur almost instantaneously. Due to the gelation occurring *in situ* there, the person consuming the food product containing the pre-fibril composition of the invention, will experience satiety, i.e. the impression of a relatively larger meal than actually consumed. This can also have benefit for animal diet foods, e.g. for companion animals. In view of peptide taste, it will be preferred to employ the pre-fibril composition in taste-masked or encapsulated form, particularly if relatively small hydrophobic peptides are substantially present. In another preferred embodiment, in which pre-fibril composition are chosen that are enriched in respect of the aforementioned relatively large peptides; an advantage is a decreased need for taste-masking measures.

Techniques for taste-masking and/or for the encapsulation of peptides are known to the skilled person, and do not require elucidation here.

The invention also pertains to making fibrils of a proteinaceous material based on a β-lactoglobulin-containing whey protein preparation obtainable by a process as substantially described hereinbefore. I.e. the process of two steps, comprising first subjecting the protein to hydrolysis so as to form peptides, and then allowing fibril formation to occur at acidic pH. The resulting products, by tailoring the peptide composition, are distinguished from a process in which the β-lactoglobulin-containing whey protein preparation is subjected to a concerted process of hydrolysis and fibrillary aggregation.

The invention encompasses the use of the aforementioned pre-fibril compositions, as well as the fibrils obtainable in accordance with the invention, in food products, particularly in acidic dairy products such as yoghurt or cheese. This use serves the aforementioned purposes, such as providing structuring properties. The invention also encompasses the resulting food products.

In the invention combinations of the various fibrils can be made. Further, combinations can be made with peptides obtainable from lysozyme, which are also fibril-forming.

The invention will be further illustrated hereinafter with reference to the following, non-limiting examples, that include a description of the Figures.

### Example 1 (reference example not according to the invention)

The pH of a 3% protein solution of bovine β-lactoglobulin was set to 2 by adding a concentrated HCl solution and heated for 20 hours at 85°C in a shearing device at a constant shear rate of 323 s-1. During this heat treatment fibrillar aggregates were formed. The heated sample was diluted to a protein concentration of 0.8 g/l. Fibrils and non-aggregated protein material of the sample were separated using centrifugal filters (MWCO 100,000). The retentate contained fibrillar aggregates, as was shown by Thioflavin T fluorescence measurements, high-performance size-exclusion-chromatography under non-dissociating condition, and transmission electron microscopy. The filtrate did not contain fibrils.

The retentate was washed and centrifuged twice with a pH 2 HCl solution to remove non-aggregated proteinaceous material left in the retentate. The proportion of proteinaceous material present in the fibrils in the heated β-lactoglobulin solution was approximately 28 wt%.

Analysis of the retentate with high-performance size-exclusion-chromatography under fibril dissociating conditions showed that in the total heated sample, retentate and filtrate, no peak was visible at the position of unheated ß-lactoglobulin, and all material eluted later than unheated β-lactoglobulin, indicating that the fibrils are not composed of intact β-lactoglobulin molecules, but peptides derived from the acid hydrolysis that takes place during heating at pH 2.

Molecular masses of the peptides present in the heated sample, retentate and filtrate were characterized using MALDI-TOF mass-spectrometry. The peptides had molecular masses between 2,000 and 8,000 Da, which means that the fibrils are composed of peptide fragments. The majority of the peptide fragments (both aggregated and non-aggregated) were a result of cleavage of the peptide bonds before or after aspartic acid. Four peptide fragments were present in the retentate and the total heated sample and not present in the filtrate, viz. [f1-32], [f1-33], [f1-52] and [f1-53] The peptide fragment dominantly present in the fibrils was [f12-33], i.e., IQKVAGTWYSLAMAASDISLL. This peptide was also present in the filtrate.

### Example 2

A solution of 2 wt% β-lactoglobulin in 50 mM Tris-HCl and 2 mM zinc acetate, pH 8, was incubated at 37°C with AspN endoproteinase (P8104S, New England Biolabs), which cleaves peptide bonds N-terminal to aspartic acid residues. After hydrolysis ∼20% of intact β-lactoglobulin was present, while the rest of the protein was hydrolyzed into peptides of different sizes. The hydrolyzed protein solution was then acidified to pH 2. As a result, the viscosity increased.

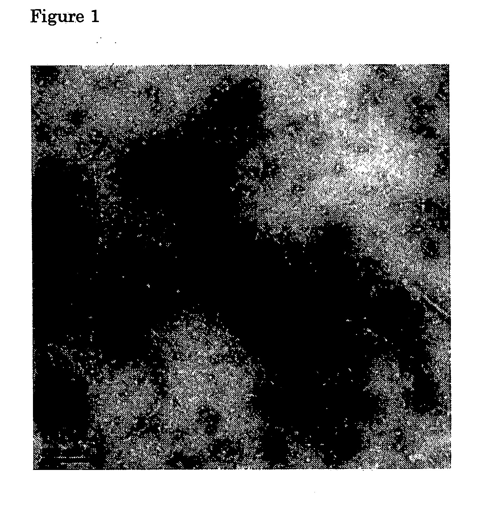

Figure 1 shows a transmission electron microscopy image of the β-lactoglobulin solution after enzymatic hydrolysis and incubation at pH 2. Fibrillar aggregates with a length of ∼1 µm can be observed in this picture, which shows that the enzymatic hydrolysis is an alternative route to obtain fibrillar aggregates of β-lactoglobulin.

### Example 3 (reference example not according to the invention)

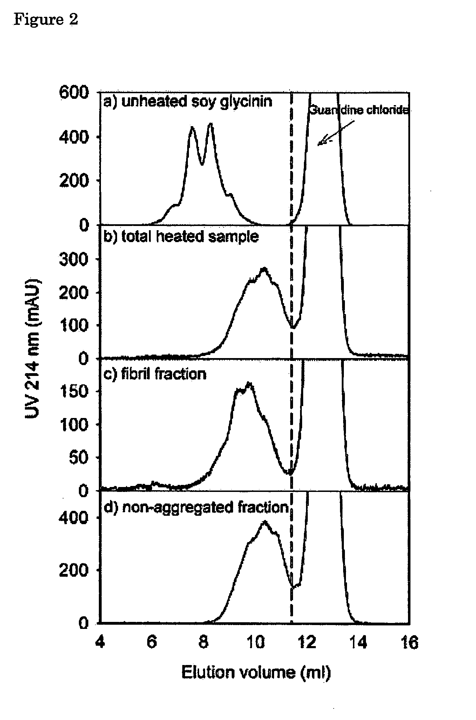

Fibrils of protein like β-lactoglobulin and soy glycinin can be prepared by heating the protein at pH 2. The peptides present after heating at pH 2 were a result of hydrolysis of the bonds between an aspartic acid residue and any other amino acid residue. Fibrils of soy glycinin are also predominantly composed of peptides. An isolate of soy glycinin was prepared from soy bean meal using isoelectric precipitation at pH 6.4. Fibrils of soy glycinin were prepared by heating (85 °C, 20 h) and shearing (shear rate of 323 s-1) a 2 wt% soy glycinin solution at pH 2. After this treatment, fibrils and non-aggregated proteins were separated from each other using centrifugal filter tubes (molecular weight cut off of 100 kDa). The non-separated fraction, the fibril fraction,the non-aggregated fraction and unheated soy glycinin were analyzed using HP-SEC (high performance size-exclusion-chromatography). Fibril dissociating conditions were used, which means that the samples were dissolved in a buffer containing 8 M guanidine chloride and 0.1M 1,4-dithiothreitol (pH 8). The HP-SEC elution profiles of the different samples is shown in Figure 2.

Figure 2 depicts HP-SEC (fibril dissociating conditions) elution profiles of (a) unheated soy glycinin, (b) total heated sample, (c) fibril fraction, and (d) non-aggregated protein material. Fibrils were dissociated using 8 M guanidine chloride and 0.1 M DTT (pH 8). The increase in UV signal of the elution profile after 11.5 ml (indicated by the dotted line) is due to the elution of guanidine chloride.

The heated material eluted later than the unheated soy glycinin solution, which shows that hydrolysis took place during the heat treatment at pH 2. Thus, peptides were present after the heat treatment. Most material present in the fibril fraction also eluted later than the unheated soyglycinin. This shows that soy glycinin fibrils are predominantly composed of peptides.

### Example 4 (reference example not according to the invention)

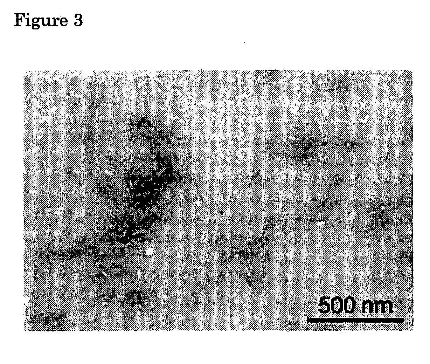

Fibrils were obtained from patatin by heating and stirring a 2 wt% protein solution for 24 h at 70 °C and pH 2. Figure 3 shows a TEM picture of the fibrils obtained from patatin. These fibrils were shorter (∼500 nm) and more flexible than fibrils formed from soy protein or β-lactoglobulin.

## Claims

1. A method of making a peptide pre-fibril composition by the hydrolysis of a protein selected from the group consisting of β-lactoglobulin-containing whey protein preparation, glycinin-containing soy bean protein preparation, patatin, and mixtures thereof, the method comprising subjecting the protein to enzymatic hydrolysis, with the proviso that the peptide pre-fibril composition is not a hydrolyzate comprising a milk protein that includes beta lactoglobulin hydrolyzed with at least one proteolytic enzyme that cleaves preferentially at a glutamic acid or aspartic acid residue, and wherein the hydrolyzate is enriched in one or more of the pep tides AQSAPLRVYVE, ILLQKWE, KTKIPAVFKID, or KTKIPAVFKIDALNE.

2. A method according to claim 1, wherein the enzymes are selected such as to obtain cleavage in majority before or after aspartic acid.

3. A method according to claim 1 or 2, wherein the protein is β-lactoglobulin.

4. A method according to claim 3, wherein the dominant peptide in the peptide pre-fibril composition is peptide TQKVAGTWYSLAMAASDISLL.

5. A method of making a proteinaceous fibril composition, comprising making a peptide pre-fibril composition by a method according to any one of the preceding claims, and in a next step subjecting the pre-fibril composition to an acidic pH at elevated temperature for a sufficient duration to allow fibrillary aggregation to start.

6. The use of a peptide pre-fibril composition obtained in a method according to any one of the claims 1-4 as an additive in a food or non-food product.

7. A use according to claim 6, wherein the food product is a human or animal diet-food or diet-drink for weight-control, and wherein the pre-fibril composition is capable of fibrillary aggregation in gastric juice.

8. A use according to claim 6, wherein the food product is a human or animal food or drink, and wherein the pre-fibril composition, is prevented from completing fibrillary aggregation in gastric juice, preferably by comprising one or more substances that counteract hydrogen bond and hydrophobic interactions of the peptides.

9. A use according to claim 6, wherein the food product is an acidic food or drink such as a yoghurt or cheese, and wherein the pre-fibril composition is allowed to form fibrils after production.

10. A food product, such as yoghurt or cheese, comprising a peptide pre-fibril composition obtainable by a process according to any one of the claims 1-4.

## Patentansprüche

1. Verfahren zur Herstellung einer Peptid-prä-Fibrillen-Zusammensetzung durch Hydrolyse eines Proteins ausgewählt aus der Gruppe bestehend aus β-Laktoglobulin-haltiger Molkeprotein-Zusammensetzung, Glycinin-haltiger - Sojabohnenprotein-Zusammensetzung, Patatin, sowie Mischungen davon, worin das Verfahren die enzymatische Hydrolyse des Proteins umfasst mit der Maßgabe, dass die Peptid-prä-Fibrillen-Zusammensetzung kein Hydrolysat ist, enthaltend ein Milchprotein, welches β-Laktoglobulin hydrolysiert mit mindestens einem proteolytischen Enzym, welches bevorzugt an einem Glutaminsäure- oder Asparaginsäurerest spaltet, umfasst, und worin das Hydrolysat angereichert ist mit einem oder mehreren der Peptide AQSAPLRVYVE, ILLQKWE, KTKIPAVFKID oder KTKIPAVFKIDALNE.

2. Verfahren gemäß Anspruch 1, worin die Enzyme so ausgewählt sind, dass eine Spaltung in der Mehrzahl vor oder nach der Asparaginsäure erfolgt.

3. Verfahren gemäß Anspruch 1 oder 2, worin das Protein β-Laktoglobulin ist.

4. Verfahren gemäß Anspruch 3, worin das dominierende Peptid in der Peptid-prä-Fibrillen-Zusammensetzung das Peptid IQKVAGTWYSLAMAASDISLL ist.

5. Verfahren zur Herstellung einer proteinogenen Fibrillen-Zusammensetzung, umfassend die Herstellung einer Peptid-prä-Fibrillen-Zusammensetzung durch ein Verfahren gemäß einem der vorhergehenden Ansprüche und in einem nächsten Schritt Aussetzen der prä-Fibrillen-Zusammensetzung einem sauren pH-Wert bei erhöhten Temperaturen für eine ausreichende Dauer, um den Start der fibrillären Aggregation zu ermöglichen.

6. Verwendung der Peptid-prä-Fibrillen-Zusammensetzung erhalten nach einem Verfahren gemäß einem der Ansprüche 1 bis 4 als Zusatz in einem Nahrungsmittel oder einem Nicht-Nahrungsmittel-Erzeugnis.

7. Verwendung gemäß Anspruch 6, worin das Nahrungsmittel ein menschliches oder tierisches Diät-Nahrungsmittel oder ein Diätgetränk zur Gewichtskontrolle ist und worin die prä-Fibrillen-Zusammensetzung im Magensaft zur fibrillären Aggregation in der Lage ist.

8. Verwendung gemäß Anspruch 6, worin das Nahrungsmittelprodukt ein menschliches oder tierisches Nahrungsmittel oder ein Getränk ist, und worin die prä-Fibrillen-Zusammensetzung an der vollständigen fibrillären Aggregation im Magensaft gehindert ist, vorzugsweise durch Zusatz von einer oder mehrerer Substanzen, die Wasserstoffbindungen und hydrophobe Interaktionen der Peptide unterbinden.

9. Verwendung gemäß Anspruch 6, worin das Nahrungsmittelprodukt ein saures Nahrungsmittel oder Getränk ist wie ein Joghurt oder Käse, und worin die prä-Fibrillen-Zusammensetzung zur Bildung von Fibrillen nach der Herstellung vorgesehen ist.

10. Nahrungsmittelprodukt wie Joghurt oder Käse, enthaltend eine Peptid-prä-Fibrillen-Zusammensetzung erhältlich durch ein Verfahren gemäß einem der Ansprüche 1 bis 4.

## Revendications

1. Procédé de préparation d'une composition pré-fibrillaire peptidique par l'hydrolyse d'une protéine choisie parmi le groupe consistant en préparation de protéine lactosérique contenant une β-lactoglobuline, préparation de protéine de soja contenant de la glycinine, patatine, et des mélanges de ces dernières, le procédé consistant à soumettre la protéine à une hydrolyse enzymatique, à la condition que la composition pré-fibrillaire peptidique ne soit pas un hydrolysat comprenant une protéine de lait incluant une β-lactoglobuline hydrolysée avec au moins une enzyme protéolytique qui clive préférentiellement un résidu d'acide glutamique ou d'acide aspartique, et où l'hydrolysat est enrichi en un ou plusieurs des peptides AQSAPLRVYVE, ILLQKWE, KTKIPAVFKID, ou KTKIPAVFKIDALNE.

2. Procédé selon la revendication 1, dans lequel les enzymes sont choisies de façon à obtenir un clivage en majorité avant ou après l'acide aspartique.

3. Procédé selon la revendication 1 ou 2, dans lequel la protéine est la β-lactoglobuline.

4. Procédé selon la revendication 3, dans lequel le peptide dominant dans la composition pré-fibrillaire peptidique est le peptide IQKVAGTWYSLAMAASDISLL.

5. Procédé de préparation d'une composition fibrillaire protéique, consistant à préparer une composition pré-fibrillaire peptidique par un procédé selon l'une quelconque des revendications précédentes, et dans une étape suivante consistant à soumettre la composition pré-fibrillaire à un pH acide à une température élevée pendant une durée suffisante pour permettre à l'agrégation fibrillaire de commencer.

6. Utilisation d'une composition pré-fibrillaire peptidique obtenue dans un procédé selon l'une quelconque des revendications 1 à 4 sous forme d'un additif dans un produit alimentaire ou non alimentaire.

7. Utilisation selon la revendication 6, dans laquelle le produit alimentaire est un aliment de régime ou une boisson de régime destiné à un humain ou un animal pour le contrôle du poids, et dans laquelle la composition pré-fibrillaire est capable d'agrégation fibrillaire dans le suc gastrique.

8. Utilisation selon la revendication 6, dans laquelle le produit alimentaire est un aliment ou une boisson destiné à un humain ou un animal, et dans laquelle on empêche la composition fibrillaire de terminer l'agrégation fibrillaire dans le suc gastrique, de préférence en comprenant une ou plusieurs substances qui s'opposent aux liaisons hydrogène et aux interactions hydrophobes des peptides.

9. Utilisation selon la revendication 6, dans laquelle le produit alimentaire est un aliment ou une boisson acide tel qu'un yaourt ou un fromage, et dans laquelle on laisse la composition pré-fibrillaire former des fibrilles après production.

10. Produit alimentaire, tel qu'un yaourt ou un fromage, comprenant une composition pré-fibrillaire peptidique pouvant être obtenue par un procédé selon l'une quelconque des revendications 1 à 4.
